# EUROPÄISCHE PATENTSCHRIFT

(11) **EP 0 748 583 B1**
(45) Veröffentlichungstag und Bekanntmachung des Hinweises auf die Patenterteilung: **15.09.1999**
(21) Anmeldenummer: 96107457.2
(22) Anmeldetag: 10.05.1996
(51) Int. Cl.: A01F 12/40

(54) **Mähdrescher**
Combine
Moissonneuse-batteuse

(30) Priorität: 17.06.1995 DE 19522031; 08.01.1996 DE 19600390
(43) Veröffentlichungstag der Anmeldung: 18.12.1996
(73) Patentinhaber: CLAAS KGaA, 33428 Harsewinkel (DE)
(72) Erfinder: Roberg, Alfons, 33428 Harsewinkel (DE)

(56) Entgegenhaltungen:
- EP-A- 0 124 628
- EP-A- 0 631 717
- DE-A- 3 319 138
- DE-A- 4 431 802
- DE-C- 540 030
- DE-C- 862 383
- DE-C- 943 016
- FR-A- 1 212 595
- FR-A- 1 502 427
- US-A- 2 670 775

## Beschreibung

Die Erfindung betrifft einen Mähdrescher mit einem Mähtisch, einem das Mähgut abtransportierenden Schrägförderer, dem ein Tangential- oder Axialdreschwerk nachgeschaltet ist, dem sich in Gutflußrichtung mindestens eine nach dem Axialflußverfahren arbeitende Trenneinrichtung anschließt, die einen rotierend antreibbaren, umfangsseitig mit mehreren wendel- oder spiralförmig verlaufenden Förderelementen aufweisenden Trennrotor und einem den oder jeden Trennrotor umgebenden, aus einer oberen Abdeckhaube und einem unteren Abscheidekorb gebildete Gehäuse aufweist, wobei wenigstens die Abdeckhaube innenseitig mit Leitstegen ausgerüstet ist, und wobei ferner der Trenneinrichtung eine Häckseleinrichtung für das Stroh zugeordnet ist.

Der infrage kommende Mähdrescher ist insbesondere zum Ernten von Getreide geeignet. Nach dem Ausdreschen der Körner mittels des Dreschwerkes ist es notwendig, die Körner aus dem Körner-Stroh-Geschmisch auszuscheiden. Die im Axialflußverfahren arbeitende Trenneinrichtung gewährleistet dabei einen kontinuierlichen Transport des Strohes um den Trennrotor herum. Dies wird durch die wendel- oder spiralförmig verlaufenden Förderelemente, beispielsweise Förderleisten, im Zusammenwirken mit den Leitstegen der Abdeckhaube erreicht. Die Leitstege können parallel und im Abstand zur Drehachse des Trennrotors verlaufen oder ebenfalls wendel- oder spiralförmig angeordnet sein. Überlicherweise ist der Trennrotor mit vier jeweils um einen Winkel von 90° zueinander versetzten, reihenweise angeordneten Förderelementen bestückt. Die äußeren, der Drehachse abgewandten Kanten der als Förderleisten ausgebildeten Förderelemente sind beispielsweise sägezahnförmig ausgebildet. Großenteils sind Mähdrescher mit einer Häckseleinrichtung für das Stroh ausgerüstet, die wahlweise eingesetzt werden, je nach dem ob das Stroh in Schwaden abgelegt werden soll oder als Häcksel auf der abgeernteten Ackerfläche verteilt werden soll. Der Trennrotor der nach dem Axialflußverfahren arbeitenden Trenneinrichtung kann entgegen der Vorwärtsfahrtrichtung des Mähdreschers oder quer dazu arbeiten. Im ersten Fall steht die Drehachse des Trennrotors quer und im zweiten Fall parallel und im Abstand zu den Radachsen des Mähdreschers.

Bei den bisher bekannten Mähdreschern ist die Häckseleinrichtung eine der Trenneinrichtung nachgeschaltete komplette Baueinheit mit den dazugehörigen Antriebselementen. Bei einem aus der DE 33 19 138 A1 bekannten Mähdrescher besteht die Häckseleinrichtung aus einer mit Messern bestückten Schneidtrommel, die mit mehreren feststehenden Messern zusammenwirken. Bei einem aus der EP 0 124 628 A1 bekannten Mähdrescher ist die Häckseleinrichtung mit mehreren rotierend antreibbaren Häckselmessern ausgerüstet, deren Drehachse fluchtend zur Dreachse des Trennrotors liegt. Bei diesen Konstruktionen wird zusätzlich Platz für die Häckseleinrichtung benötigt. Da die Häckselmesser nacheinander zum Einsatz kommen, kann man den Schneidbetrieb auch als diskontinuierlich oder taktmäßig ansehen, wodurch die Länge des Häckselgutes noch relativ groß ist.

Der vorliegenden Erfindung liegt die Aufgabe zugrunde, einen Mähdrescher der eingangs näher beschriebenen Art so zu gestalten, daß der konstruktive Aufwand deutlich verringert wird, daß eine äußerst kompakte Bauweise erreicht wird, und daß das Stroh gegenüber den bekannten Ausführungen relativ kurz gehäckselt wird.

Die gestellte Aufgabe wird gelöst, indem die Häckseleinrichtung als Axialfluß-Häckseleinrichtung ausgebildet ist und innerhalb eines definierten Bereiches der Förderstrecke des Trennrotors der Trenneinrichtung liegt, daß zum Häckseln des Strohes die Förderelemente des Trennrotors über den definierten Bereich mit im Abstand zueinander stehenden, außenseitig offenen Radialschlitzen versehen sind, daß auf mindestens einer Aufnahmeachse im Abstand zueinander stehende, in der Umlaufbahn der Förderleisten liegende Häckselmesser derart angeordnet sind, daß jedes Häckselmesser für den Schneidvorgang kurzzeitig innerhalb des jeweiligen Radialschlitzes liegt.

Bei dem erfindungsgemäßen Mähdrescher wird die Häckseleinrichtung in die Trenneinrichtung integriert, wodurch nicht nur der konstruktive Aufwand verringert wird, sondern auch der zusätzliche Raum für die Häckseleinrichtung weitgehend entfällt, so daß eine äußerst kompakte Bauweise erreicht wird. Die Axialfluß-Häckseleinrichtung ist Teil des den Trennrotor umgebenden Gehäuses und ist baugleich wie die Einzel-Abscheidekörbe auf beidseitigen Profilschienen verschiebbar gelagert. Die Gehäusemulde der Häckseleinrichtung ist an sich vollflächig ausgebildet und weist radial verlaufende Schlitze für den Eintritt der Häckselmesser auf. Die Häckselleistung ist außerordentlich hoch, da das Häckseln des Strohes während des kontinuierlichen Transportes durch den Trennrotor erfolgt. Der Schneidvorgang bzw. der Häckselvorgang kann demzufolge als kontinuierlich angesehen werden. Durch die außen, d.h. an der der Drehachse des Trennrotors abgewandten Seite offenen Radialschlitze ist es möglich, daß diese an den Häckselmessern vorbei geführt werden. Da die Breite jedes Radialschlitzes relativ gering ist, wird die fördernde Wirkung nicht beeinträchtigt. Ein weiterer Vorteil ist darin zu sehen, daß die bislang notwendigen Antriebsmittel für die Schneidrotoren oder für Häckselmesser entfallen, da in technisch funktioneller Hinsicht die zwischen den Radialschlitzen verbleibenden Teile der Förderleisten mit den rotierenden Häckselmessern gleichzusetzen sind. Für den Häckselvorgang wird demzufolge eine ohnehin immer vorhandene Bewegung benutzt.

Durch die Radialschlitze werden die als Förderleisten ausgebildeten Förderelemente geschwächt. Da sie jedoch dem Schneiddruck standhalten müssen, ist vorgesehen, daß die zwischen den Radialschlitzen liegenden Teile der Förderleisten als Mitnehmerplatten ausgebildet sind, und daß an der in Förderrichtung hinten liegenden Seite abstützend wirkende Verstärkungsbleche angeordnet sind. Die einen Radialschlitz begrenzenden Mitnehmerplatten drücken das zu schneidende Stroh gegen die Häckselmesser, wodurch der Schneidvorgang erfolgt. Der Trennrotor besteht im wesentlichen aus einem zylindrischen Grundkörper und den umfangsseitig darauf verlaufenden Förderelementen. Da es nicht möglich ist, daß die Häckselmesser den Grundkörper berühren ist in weiterer Ausgestaltung vorgesehen, daß jeder Mitnehmerplatte an der in Förderrichtung vorn liegenden Seite eine der Drehachse des Trennrotors zugewandte, das Häckselgut nach außen drückende Abweisplatte zugeordnet ist. Diese Abweisplatte verläuft schräg, so daß das zu häckselnde Stroh zumindest aus dem Spalt zwischen dem Grundkörper und den Häckselmessern herausgedrückt wird. Damit auch das zu häckselnde Stroh auch von der dem Grundkörper abgewandten Seite der Trenneinrichtung nach innen gedrückt wird, ist vorgesehen, daß innenseitig am Abscheidekorb, in Förderrichtung des Trennrotors gesehen, unmittelbar vor der Aufnahmeachse für die Häckselmesser das Häckselgut in Richtung zur Drehachse des Trennrotors leitende Rampenbleche angeordnet sind. Zweckmäßigerweise sind die Häckselmesser dem Abscheidekorb des Gehäuses zugeordnet, da dieser unten liegt und dadurch die Häckselmesser in der normalen Flußrichtung des Häckselgutes angeordnet sind. Der Häckseleinrichtung ist eine an sich bekannte Verteilvorrichtung nachgeschaltet. Eine besonders stabile Ausführung für die Mitnehmerplatten wird erreicht, wenn diese im Querschnitt winkelförmig ausgebildet sind. Sie können dann auch als vorgefertigte Teile auf den Grundkörper, beispielsweise durch Schweißung festgesetzt werden.

Gemäß einer weiteren Ausführungsform ist vorgesehen, daß die außenseitig offenen Radialschlitze des Förderelementes beidseitig durch Schlagzähne mit einer gegenüber der Länge der Axialfluß-Häckseleinrichtung geringen Breite gebildet sind, daß die einen Radialschlitz an jeder Seite begrenzenden Schlagzähne an Tragringen angesetzt sind und gegenüber deren äußeren Umfangsflächen vorstehen, und daß die Tragringe auf dem Grundkörper der Trennrotors drehfest aufgesetzt sind.

Diese Ausführung ist konstruktiv wesentlich einfacher und die Häckselwirkung wird wesentlich erhöht. Im Bereich der Axialflußhäckseleinrichtung werden die Förderelemente nunmehr durch die an den Tragringen angesetzten Schlagzähne gebildet, die ebenfalls wendelspiral-oder schraubenlinienförmig verlaufen. Jeder Tragring ist mit einer Anzahl von Schlagzähnen bestückt, die der Anzahl der Förderelemente entspricht, so daß der kontinuierliche Durchfluß des Häckselgutes gewährleistet ist. Die Konstruktion wird besonders einfach, wenn jeder Tragring mit den Schlagzähnen aus einem einstückigen Bauteil besteht. Die Schlagzähne bilden mit ihren Schlagflächen ein besonders stabiles Widerlager für das zu häckslnde Gut. Die Tragringe mit den Schlagzähnen lassen sich in äußerst einfacher Weise herstellen. Auch die Montage ist äußerst einfach, da sie auf den Grundkörper 10 nur gegen Drehung gesichert, aufgesetzt werden müssen. Sollte aus Gründen einer Reparatur eine Demontage notwendig werden, ist diese ebenfalls entsprechend einfach durchzuführen. Die Breite der Radialschlitze läßt sich durch Änderung der Abstände der Tragringe einstellen, wobei die Abstände nicht gleichbleibend sein müssen. Bei dieser Ausführung ist es zweckmäßig, wenn die Tragringe paarweise angeordnet sind und daß der Abstand zwischen den einander zugewandten Ringen von zwei Paaren größer ist als der Abstand zwischen zwei ein Paar bildende Ringe. Im Normalfall liegen dann die Häckselmesser in den Radialschlitzen, die durch die Paare von Tragringen gebildet sind, deren Abstände geringer sind als die zwischen den einzelnen Paaren liegenden Abstände. In weiterer Ausgestaltung, ist es jedoch genauso gut möglich, daß auch in den Radialschlitzen zwischen den paarweise angeordneten Tragringen ein oder mehrere Häckselmesser eingreifen. Die Schlagzähne der Tragringe erstrecken sich schraubenlinienförmig, mehrgängig über den gesamten Umfang des Grundkörpers des Trennrotors. Dadurch tauchen die Häckselmesser während einer Rotorumdrehung ständig in die aus zwei benachbarten Tragringen gebildeten Radialschlitze ein, so daß bei dieser Ausführung die das zu häckselnde Gut anhebenden Abweisplatten entfallen können. Damit die Stabilität der Schlagzähne sichergestellt ist, ist vorgesehen, daß die, bezogen auf die Stirnansicht, trapezförmig ausgebildet sind, wobei sie sich querschnittsmäßig nach außen hin verkleinern. Dadurch wird eine ausreichende Fußfestigkeit der Schlagzähne erreicht. Die Breiten der Schlagzähne könnten beispielsweise mit den Dicken der Häckselmesser übereinstimmen oder ein klein wenig größer oder kleiner sein.

Die Anordnung der Häckseleinrichtung im Bereich des Abscheidekorbes ist konstruktiv besonders einfach, wenn dieser aus mehreren fluchtend zueinander stehenden Einzelkörben gebildet ist, und daß die äußeren Ränder der Einzelkörbe in zwei parallel und im Abstand zueinander sowie parallel und im Abstand zur Drehachse des Trennrotors verlaufenden Profilschienen aufgehängt sind. Dadurch lassen sich die Einzelkörbe von einer, beispielsweise von der hinteren Seite in äußerst einfacher Weise in die Profilschienen einschieben. Außerdem wird eine Reinigung und gegebenenfalls ein Wechsel äußerst einfach. Damit sie eindeutig fixiert sind, werden die äußeren Ränder beispielsweise zwischen die nach außen abgewinkelten Rändern der Haube und den Profilschienen festgeklemmt. Damit ein einwandfreier Abtransport des Häckselgutes gewährleistet ist, ist vorgesehen, daß die Häckseleinrichtung im Abstand zum Austrageende des Trennrotors steht. Dieser Abstand kann beispielsweise der Länge eines Einzelkorbes entsprechen.

Damit es nicht zu einer Verstopfung kommt, wenn beispielsweise mittels des Trennrotors eine extrem große Menge von Stroh gefördert wird, oder wenn Fremdkörper in die Trenneinrichtung gelangen, ist zur Vermeidung einer Beschädigung der Häckselmesser vorgesehen, daß die Häckselmesser gegenüber der Aufnahmeachse oder die Aufnahmeachse entgegen der Wirkung eines Kraftspeichers um einen vorbestimmten Drehwinkel entgegen der Drehrichtung des Trennrotors in einer Außerbetriebsstellung schwenkbar sind. Durch den Kraftspeicher werden die Häckselmesser dem Häckselgut mit einer bestimmten Gegenkraft entgegengesetzt. Wird diese Kraft übertroffen, können sie ausweichen. Wenn der oder die Kraftspeicher direkt auf die Häckselmesser wirken, müssen diese um einen bestimmten Winkel gegenüber der Aufnahmeachse verdrehbar sein. Die Endstellungen können beispielsweise durch Anschläge begrenzt sein. Sind sie jedoch drehfest auf der Aufnahmeachse festgesetzt, muß sich die Aufnahmeachse um diesen Winkel drehen könnten. Da es beim Betrieb des Mähdreschers vorkommt, daß wahlweise das Stroh in Schwaden abgelegt oder gehäckselt wird, ist zur einfachen Inbetriebsetzung bzw. Außerbetriebsetzung der Häckseleinrichtung vorgesehen, daß die Aufnahmeachse für die Häckselmesser mittels eines Stelltriebes um einen vorbestimmten Drehwinkel verschwenkbar sind. Dieser Stelltrieb könnte ein Hebelgestänge und eine Kolbenzylindereinheit in Form eines Hydraulikzylinders beinhalten. Der Hydraulikzylinder wird dann von der Fahrerkabine aus elektrisch angesteuert.

Das Häckselgut wird durch den Transport mittels des Trennrotors auch verdichtet. Damit es im Bereich des Endes des Trennrotors nicht mehrmals um den Trennrotor herumgeführt wird, ist vorgesehen, daß der den Trennrotor umgebende Ringraum zwischen der Axialfluß-Häckseleinrichtung und dem Austrageende des Trennrotors sich zumindest bereichsweise im Querschnitt vergrößert. Dadurch wird das gehäckselte Gut aufgelockert, so daß es mittels der nachgeschalteten Verteileinrichtung ausgeworfen wird. Da die Auswurföffnung normalerweise dem unteren Bereich des Trennrotors zugeordnet ist, ist es zweckmäßig, wenn der Ringraum sich im Bereich der oberen Haube vergrößert, dies ist auch konstruktiv einfach durch eine entsprechende Gestaltung der Haube zu erreichen. Um den Schneidvorgang beim Häckseln des Halmgutes zu erleichtern, ist in weiterer Ausgestaltung noch vorgesehen, daß die Häckselmesser mittels eines Drehantriebes rotierend antreibbar sind. Dabei ist es dann konstruktiv einfach, wenn beispielsweise die die Häckselmesser aufnehmende Aufnahmeachse beispielsweise mittels eines Hydraulikmotors rotierend antreibbar ist. Damit der Schneidvorgang kontinuierlich verläuft ist es dann zweckmäßig, wenn die Häckselmesser als Tellermesser oder Messerscheiben ausgebildet sind. Außerdem entstehend dann keine Unwuchten. Damit die Länge des Häckselgutes geändert werden kann, ist vorgesehen, daß die Häckselmesser einzeln oder gruppenweise in die Betriebs- und Außerbetriebsstellung bringbar sind. Dadurch ist es möglich, bestimmte Häckselmesser in die Betriebsstellung zu schwenken und die restlichen Häckselmesser außer Betrieb zu setzen.

Anhand der beiliegenden Zeichnungen wird die Erfindung noch näher erläutert.
Es zeigen:
- Figur 1: einen erfindungsgemäßen Mähdrescher in einer schematisch Seitenansicht,
- Figur 2: einen Schnitt längs der Linie II-II in der Figur 1 einer ersten Ausführungsform
- Figur 3: die Anordnung der Häckseleinrichtung in der Seitenansicht, mit Blick aus Richtung der Figur 2 in dieser Ausführungsform
- Figur 4: den Trennrotor als Einzelheit in der perspektivischen Darstellung, in der ersten Ausführungsform
- Figur 5: den Trennrotor als Einzelheit in der perspektivischen Darstellung, in der zweiten Ausführungsform, in vereinfachter Darstellung,
- Figur 6: eine der Figur 2 enstprechende Schnittdarstellung, jedoch für die Ausführung des Trennrotors gemäß der Figur 5,
- Figur 7: die Anordnung der Häckseleinrichtung gemäß den Figuren 5 und 6, mit Blick aus Richtung der Figur 6 und
- Figur 8: eine den Figuren 2 und 6 entsprechende Schnittdarstellung, jedoch mit rotierend angetriebenen Häckselmessern.

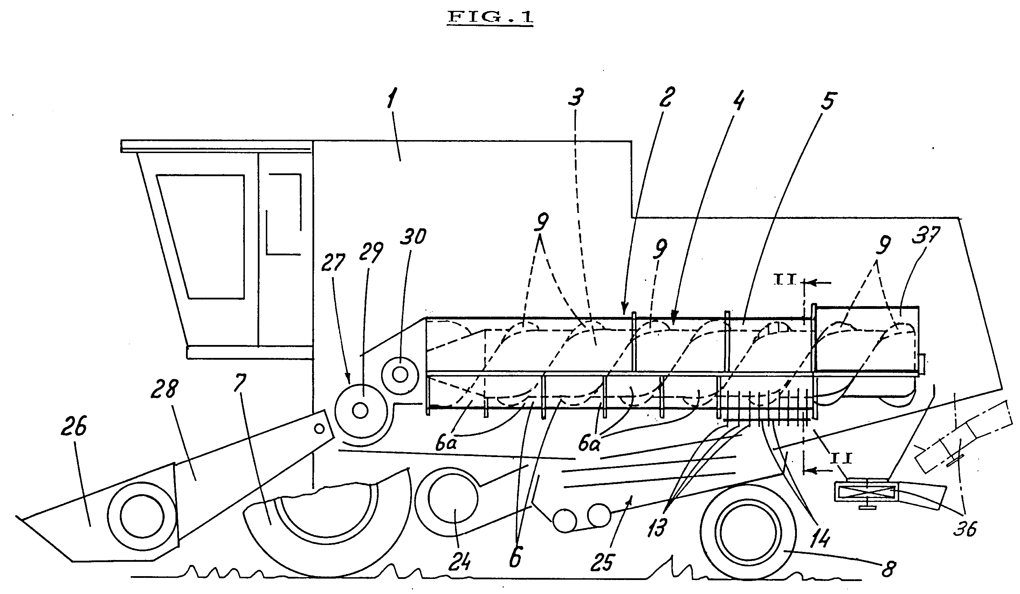

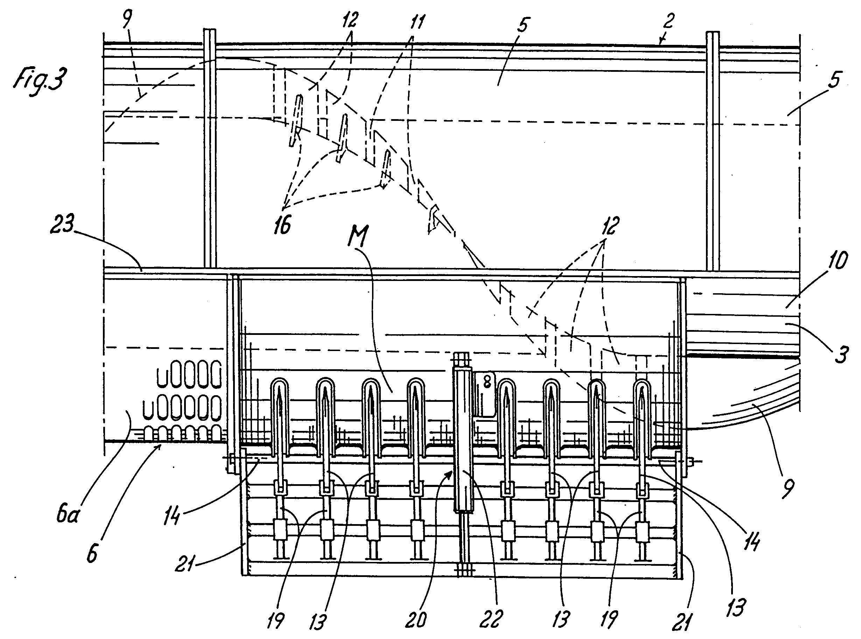

Der in der Figur 1 dargestellte Mähdrescher 1 ist als selbstfahrender Mähdrescher ausgebildet, der mit einer nach dem Axialflußverfahren arbeitenden Trenneinrichtung 2 ausgerüstet ist. Die Trenneinrichtung 2 beinhaltet einen rotierend antreibbaren Trennrotor 3, der von einem Gehäuse 4 umgeben ist. Dieses Gehäuse 4 besteht aus einem Oberteil in Form einer Haube 5 und einem Untereil in Form eines Abscheidekorbes 6. Im dargestellten Ausführungsbeispiel liegt die Drehachse des Trennrotors 3 quer zu den Radachsen der Räderpaare 7, 8 des Mähdreschers 1. Demzufolge ist die Förderrichtung des Trennrotors 3 entgegengesetzt zur Vorwärtsfahrtrichtung des Mähdreschers 1. Der Trennrotor 3 ist außerdem mit vier die Förderelemente bildenden Förderleisten 9 versehen, die wendelförmig um den Grundkörper 10 herumgeführt sind. In einem Bereich im Abstand zum hinteren Abgabeende des Trennrotors 3 sind die Förderleisten 9 mit im Abstand zueinander angeordneten Radialschlitzen 11 versehen, die nach außen, d.h. der der Drehachse des Trennrotors 3 abgewandten Seite offen sind. Diese Radialschlitze 11 sind im Ausführungsbeispiel gemäß den Figuren 1 - 4 durch in einem entsprechenden Abstand zueinander angeordneten, im Querschnitt winkelförmigen Mitnehmerplatten 12 gebildet. Im Bereich der Radialschlitze 11 bzw. der Mitnehmerplatten 12 des Trennrotors 3 ist im unteren Bereich eine Reihe von Häckselmessern 13 angeordnet, die auf einer zur Drehachse des Trennrotors 3 achsparallelen Aufnahmeachse 14 in noch näher erläuterter Weise gelagen sind. Die segmentartig ausgebildeten Häckselmesser 13 sind so auf die Aufnahmeachse 14 gesetzt, daß in Arbeitsstellung der Häckselmessergruppe die Radialschlitze 11 der Förderleisten 9 daran vorbei laufen. Die Häckselmesser 13 bieten in Kombination mit den Radialschlitzen 11 bzw. den Mitnehmerplatten 12 und den Förderleisten 9 eine Axialflußhäckseleinrichtung. Die fördernde Wirkung der Förderleisten 9 wird durch diese Radialschlitze nicht beeinträchtigt, da die Breite jedes Radialschlitzes 11 im Gegensatz zur Breite der Mitnehmerplatte 12 relativ gering ist. Die Breite jedes Radialschlitzes 11 muß nur so groß sein, daß das jeweilige Häckselmesser 13 nicht beschädigt wird. Das Häckseln des mittels des Trennrotors geförderten Strohes erfolgt während des kontinuierlichen Transportes. Dazu sind außerdem an der Innenseite der Haube 5 Leitstege 15 angesetzt.

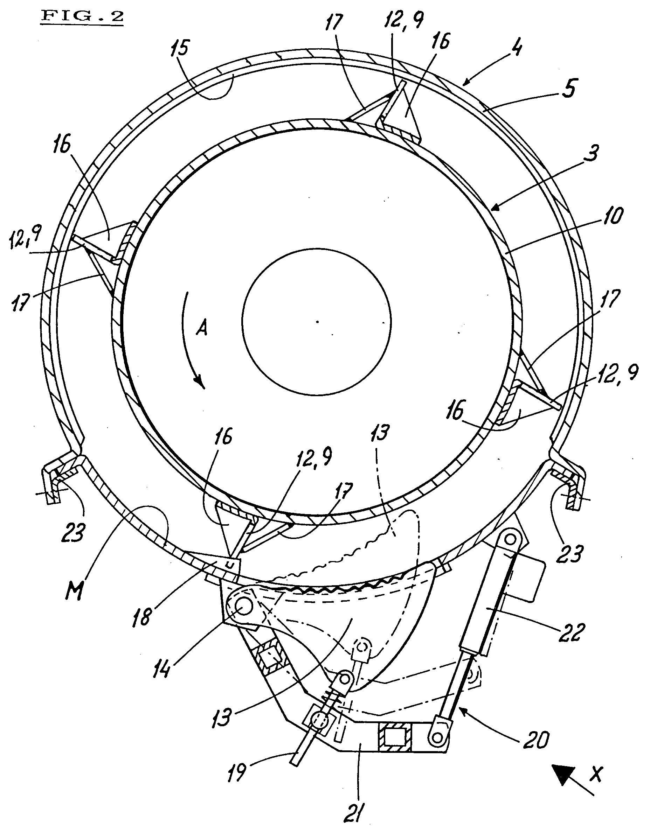

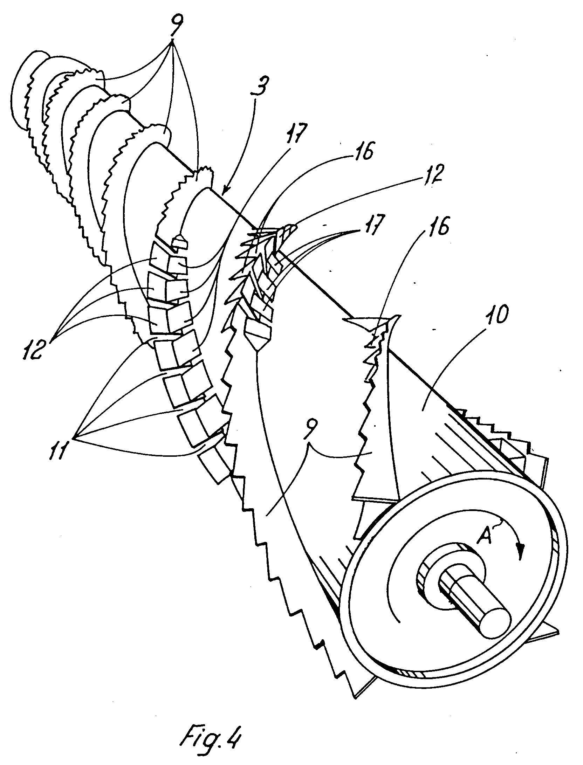

Damit die Mitnehmerplatten 12 sich durch den von den Häckselmessern 13 aufgebauten Gegendruck nicht verformen, sind sie an der in Förderrichtung hinteren Seite durch Verstärkungsbleche 16 stabilisiert. In der Figur 2 ist in strichpunktierten Linien die Betriebsstellung der Häckselmesser 13 gezeichnet. In Vollinien ist die Außerbetriebsstellung dargestellt. Damit das zu häckselnde Stroh in Richtung zur Aufnahmeachse 14 gedruckt wird, sind den Mitnehmerplatten 12 an der in Förderrichtung vorn liegenden Seite schrägstehende Abweisplatten 17 zugeordnet. Die Drehrichtung des Trennrotors 3 ist in der Figur 2 und der Figur 4 durch den Pfeil A dargestellt. Bezogen auf diese Drehrichtung ist der Abscheidekorb 6 innenseitig kurz vor der achsparallelen Aufnahmeachse 14 mit dreieckförmigen Rampenblechen 18 ausgerüstet, damit das zu häckselnde Stroh von der Innenwand des Abscheidekorbes 6 weggedrückt wird. Durch die Abweisplatten 17 und die Rampenbleche 18 wird verhindert, daß gedroschene Halme unzerschnitten die Häckseleinrichtung passieren.

Im dargestellten Ausführungsbeispiel gemäß den Figuren 1 bis 4 ist an jedem Häckselmesser 13 an der der Schneidseite gegenüberliegenden Rückseite ein federbelasteter Hebel 19 angelenkt. Wie die Figur 2 zeigt, wird jedes Häckselmesser 13 aus der Umlaufbahn der Mitnehmerplatten 12 herausgedrückt, wenn eine bestimmte Kraft überschritten wird. Dazu ist es notwendig, daß jedes Häckselmesser 13 um einen bestimmten Winkel gegenüber der achsparallelen Aufnahmeachse 14 verdrehbar ist. Im Gegensatz dazu könnte jedoch auch die achsparallele Aufnahmeachse 14 um diesen Winkel geschwenkt werden. Damit die Häckselmesser aus der umlaufenden Bahn der Mitnehmerplatten 12 herausgeschwenkt werden können, wenn das Stroh in Schwaden abgelegt werden soll, ist die achsparallele Aufnahmeachse 14 durch einen elektrisch ansteuerbaren Stelltrieb 20 entsprechend verdrehbar. Dieser Stelltrieb 20 besteht aus einem auf die achsparallele Aufnahmeachse 14 aufgesetzten Winkelhebel 21 und einem Hydraulikzylinder 22. An dem Winkelhebel 21 kann außerdem in einem Lagerklotz der Hebel 19 angeordnet sein. Im dargestellten Ausführungebeispiel besteht der Abscheidekorb 6 aus mehreren fluchtend zueinander angeordneten Einzelkörben 6a. Wie die Figur 1 zeigt, liegen die Häckselmesser 13 in einem solchen Abstand zum hinteren Abgabeende des Trennrotors 3, der in etwa der Länge eines Einzelkorbes entspricht. Die äußeren Ränder der Einzelkörbe 6a sowie die der baugleichen Mulde M der Häckseleinrichtung sind nach außen abgewinkelt. Die äußeren Ränder der Haube 5 sind ebenfalls z-förmig nach außen abgewinkelt und mit im Querschnitt winkelförmigen Profilschienen 23 verschraubt. Dadurch werden die abgewinkelten Ränder der Einzelkörbe 6a festgeklemmt. Bei Lösen dieser Klemmung können die Einzelkörbe 6a und die Häckseleinrichtung verschoben werden, so daß sie zum Wechseln oder zur Reinigung in einfachster Weise montiert bzw. demontiert werden können.

Der Mähdrescher 1 ist ferner noch mit einem unterhalb des Trennrotors 3 liegenden Gebläse 24 und einer ebenfalls unterhalb des Trennrotors 3 liegenden Siebeinrichtung 25 ausgerüstet. In nicht dargestellter Weise ist im Austrageende des Trennrotors 3 noch eine allgemein bekannte Verteilereinrichtung für das Häckselgut zugeordnet. Außerdem ist der Mähdrescher 1 in an sich bekannter Weise mit einem Mähtisch 26 und einem das Mähgut zu einem Dreschwerk 27 fördernden Schrägförderer 28 ausgerüstet. Im dargestellten Ausführungsbeispiel besteht das Dreschwerk 27 aus einer Dreschtrommel 29 und einer Übergabetrommel 30, die unmittelbar vor dem Aufgabeende des Trennrotors 3 quer zu dessen Drehachse gelagert ist.

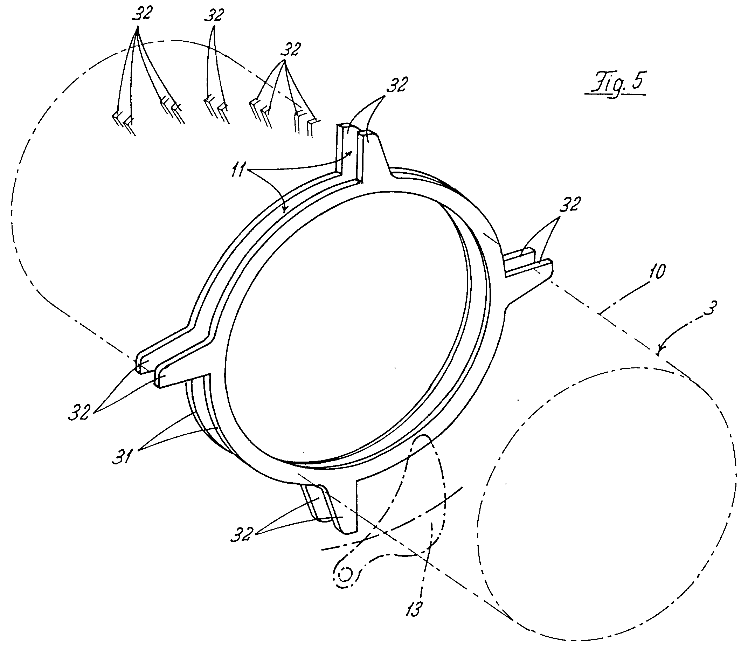

Bei der in den Figuren 5 bis 8 gezeigten Ausführung des Trennrotors 3 ist der ebenfalls zylindrisch gestaltete Grundkörper 10 mit einer Vielzahl von im Abstand zueinander angeordneten Tragringen 31 bestückt, die in nicht näher erläuterter Weise drehfest, jedoch auswechselbar auf dem Grundkörper 10 festgelegt sind. Jeder Tragring 31 ist mit vier gegenüber der äußeren Mantelfläche vorstehenden, im Winkel von 90° zueinander versetzten Schlagzähnen 32 versehen, wobei die Schlagzähne 32 mit den Tragringen 31 ein einstückiges Bauteil bilden. Es können jedoch auch mehr oder weniger als 4 Schlaglzähne an einem Tragring ausgebildet werden. Aus Gründen der vereinfachten Darstellung sind in der Figur 5 nur zwei im Abstand zueinander angeordnete Tragring 31 gezeichnet, die ein Paar bilden. Von fünf weiteren Paaren sind nur zwei Schlagzähne 32 angedeutet, so daß aus der Figur 5 erkennbar ist, daß die jeweils eine Reihe bildenden Schlagzähne 32 spiral-, wendel- oder schraubenlinienförmig um den Grundkörper 10 des Trennrotors 3 herumgeführt sind.

Demzufolge stehen die Schlagzähne 32 der ein Paar bildenden Tragringe 31 im Winkelversatz zueinander. Die Schlagzähne 32 eines Paares von Tragringen 31 sind demgegenüber nicht versetzt. Aus der Figur 5 ergibt sich, daß im dargestellten Ausführungsbeispiel die Abstände von zwei ein Paar bildenden Tragringen 31 deutlich geringer sind, als die Abstände zwischen zwei Paaren von Tragringen 31. Ferner ergibt sich aus der Figur 5, daß die Häckselmesser 13 in dem zwischen den beiden ein Paar bildende Tragring 31 eingreifen. In nicht näher dargestellter Weise können jedoch ein oder mehrere Häckselmesser auch in den Zwischenräumen angeordnet sein, die zwischen zwei Paaren von Tragriemen 31 liegen. Aus der Figur 5 ergibt sich außerdem noch, daß die Radialschlitze 11 nicht nur durch die Schlagzähne der paarweise angeordneten Tragringe 31, sondern auch durch die einander zugewandten Tragringe selbst gebildet werden. Im Gegensatz zur dargestellten Ausführung, können auch mehr als zwei Tragringe eine funktionell zusammengehörige Gruppe bilden, wobei dann ebenfalls Häckselmesser in die Zwischenräume eingreifen, sofern das Stroh gehäckselt werden soll.

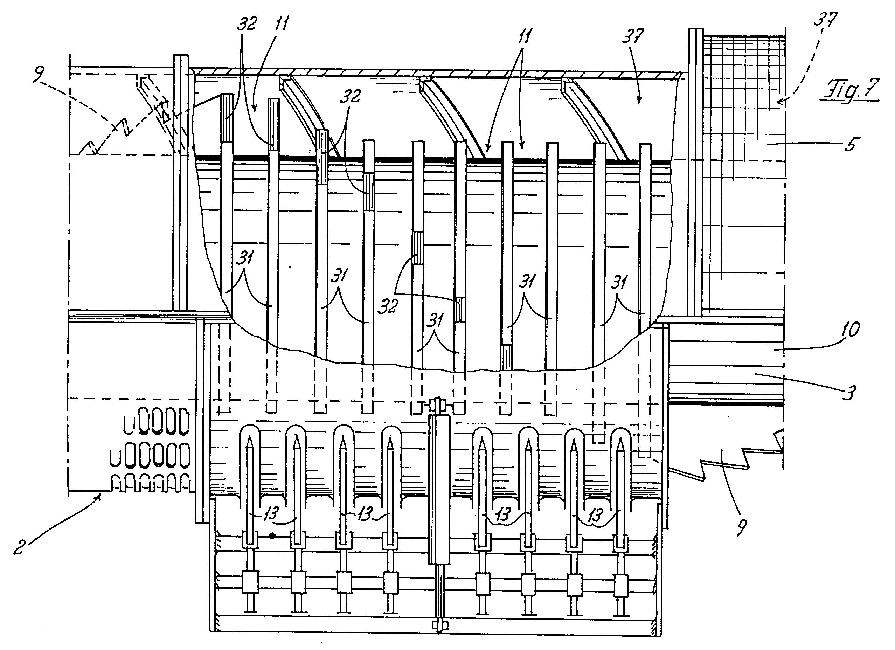

Im Gegensatz zu der in den Figuren 5 bis 8 dargestellten Ausführung können die Tragringe 31 in gleichen Abständen zueinander auf den Grundkörper 10 aufgesetzt werden. Dabei können die Schlagzähne 32 dem schraubenlinienförmigen Verlauffolgen, so daß zwei neben einem Häckselmesser 13 stehende Schlagzähne 32 im Winkelversatz zueinander stehen. (Figur 7)

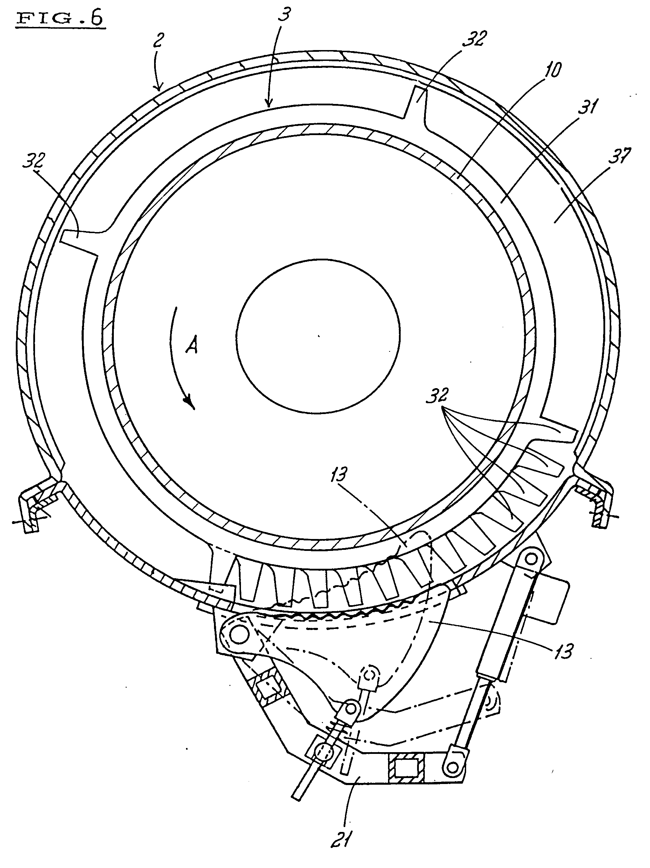

Ein Vergleich der Figur 2 mit der Figur 6 zeigt, daß beim Ausführungsbeispiel gemäß den Figuren 5 bis 8 ausschließlich der Trennrotor 3 abweichend gestaltet ist. Da die übrigen Bauteile baugleich geblieben sind, werden sie auch nicht näher beschrieben. Aus der Figur 6 geht deutlich hervor, daß die Schlagzähne 32 in einem solchen Winkelversatz stehen, daß sie, bezogen auf eine Stirnansicht des Trennrotors 3, über den gesamten Umfang im gleichen Winkelabstand verteilt sind. In der Figur 6 ist dabei nur ein Wendelbereich zwischen zwei von vier benachbarten Wendelbereichen dargestellt. Die Schlagkanten der Schlagzähne 32 liegen, bezogen auf die Betriebsdrehrichtung A des Trennrotors 3 vorn und können mit austauschbaren Verschleißteilen ausgerüstet oder in sich vergütet sein.. Die Querschnitte der Schlagzähne 32 verkleinern sich nach außen, da sie, bezogen auf die Stirnansicht, trapezförmig gestaltet sind, indem die den vorn liegenden Schlagkanten abgewandt liegenden hinteren Kanten schräg stehen, so daß der Fuß jedes Schlagzahnes 32 den größten Querschnitt hat.

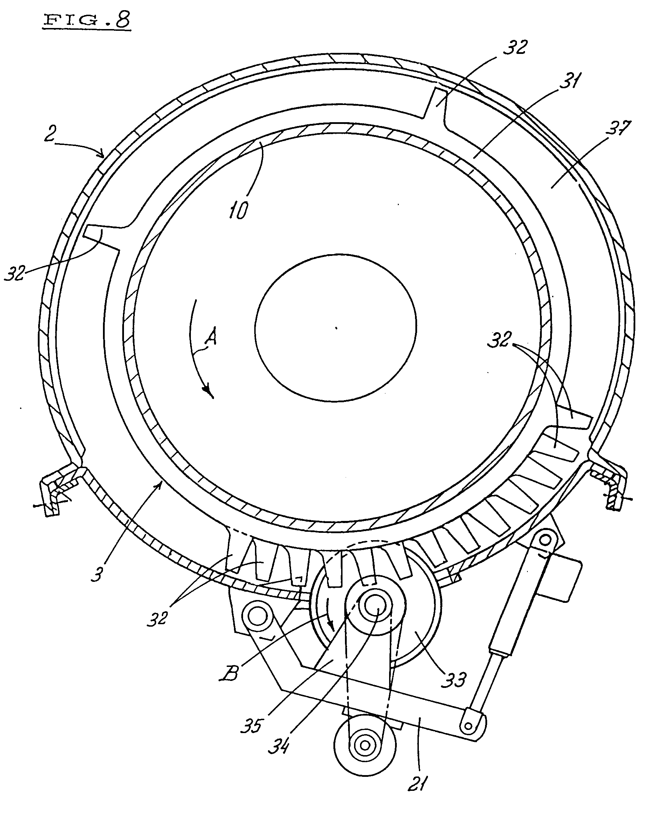

Die Figur 7 zeigt die Ausführungsform des Trennrotors 3 entsprechend der Figur 6 in einer Seitenansicht, wobei die Abstände zwischen den einzelnen Tragringen 31 gleich sind. Die Häckselmesser 13 tauchen in die Ringräume der benachbarten Tragringe 31 ein, wodurch eine intensivere Zerkleinerung des durchlaufenden Halmgutes erfolgt. Die Figur zeigt, daß die außerhalb der Axialfluß-Häckseleinrichtung liegenden Förderelemente als Förderleisten 9 mit gezahntem Außrenrand ausgebildet sind. Es ist außerdem erkennbar, daß die Schlagzähne 32 kurvenförmig um den Grundkörper 10 herumgeführt sind. Bei der Ausführung nach der Figur 7 ist zwischen jedem Tragring 31 ein Häckselmesser 13 angeordnet. Ferner ergibt sich aus dieser Figur, daß die Haube 5 gegenüber dem Trennrotor 3 nach oben verspringt, so daß der Ringspalt zwischen der Axialfluß-Häckseleinrichtung und dem hinteren Austrageende des Trennrotors 3 sich querschnittsmäßig vergrößert. Dadurch wird das gehäckselte Stroh aufgelockert, und die Abgabe des Häckselgutes begünstigt. Die Ausführung nach der Figur 8 unterscheidet sich von den Ausführungen gemäß den Figuren 2 bis 6 dadurch, daß die Häckselmesser mittels eines nicht näher erläuterten Antriebes in Form eines Riementriebes oder eines Hydromotors rotierend in Pfeilrichtung B angetrieben sind. Die rotierend antreibbaren Häckselmesser lassen sich sowohl bei der Ausführungsform gemäß den Figuren 1 bis 4 als auch bei der Ausführungsform nach den Figuren 5 bis 7 verwirklichen. Bei der Ausführung nach der Figur 8 sind die Häckselmesser als kreisrunde Schneidscheiben 33 oder als Tellermesser ausgebildet, die auf einer Welle 34 drehfest aufgesetzt sind. Die Welle 34 ist in Lagerböcken 35 gelagert, die mit dem Winkelhebel 21 verbunden sind, so daß sie wiederum schwenkbar sind. Die Schneidscheiben 33 können umfangsseitig mit Schneidzähnen oder mit durchgehenden Schneidkanten versehen sein. In nicht dargestellter Weise können die Häckselmesser 13 bzw. die Schneidscheiben 33 einzeln oder in Gruppen in eine Be-und in eine Außerbetriebsstellung geschwenkt werden, um die Länge des Häckselgutes zu variieren, oder um gegen Fremdkörper auszuweichen. Sie müssten dann entsprechend auf mehreren Wellen gelagert werden. Die Verstellung der Häckselmesser 13 bzw. die Schneidscheiben 33 in die Be- oder die Außerbetriebsstellung kann manuell oder motorisch erfolgen. Bei einer motorischen Verstellung erfolgt die Schaltung vorzugsweise von der Fahrerkabine aus. Die Schalteinrichtung kann dabei mit elektrischen oder elektronischen Anzeigerichtungen kombiniert werden, die Betriebsstellung sowie die theoretische Schnittlänge des Häckselgutes bei der gewählten Schwenkstellung anzeigen. Entgegen den zeichnerisch dargestellten Ausführungen kann der Mähdrescher 1 mit mehreren Trenneinrichtungen 2 und einer entsprechenden Anzahl von Trennrotoren 3 ausgestattet sein.
Bei eingeschaltetem Häcksler ist unterhalb des Austragendes der Trenneinrichtung 2 eine Verteileinrichtung 36 für das Häckselgut in Wirkstellung gebracht, die in ihrer Lage veränderbar am Maschinengehäuse angeordnet ist.

## Patentansprüche

1. Mähdrescher mit einem Mähtisch, einem das Mähgut abtransportierendem Schrägförderer, dem ein Tangential- oder Axialdreschwerk nachgeschaltet ist, dem sich in Gutflußrichtung mindestens eine nach dem Axialflußverfahren arbeitende Trenneinrichtung anschließt, die einen rotierend antreibbaren, umfangsseitig mit mehreren wendel- oder spiralförmig verlaufenden Förderelementen aufweisenden Trennrotor und einem den oder jeden Trennrotor umgebenden, aus einer oberen Abdeckhaube und einem unteren Abscheidekorb gebildeten Gehäuse aufweist, wobei wenigstens die Abdeckhaube innenseitig mit Leitstegen ausgerüstet ist und wobei ferner der Trenneinrichtung eine Häckseleinrichtung für das Stroh zugeordnet ist,
**dadurch gekennzeichnet**,
daß die Häckseleinrichtung als Axialflußhäckseleinrichtung ausgebildet ist und innerhalb eines definierten Bereiches der Förderstrecke des Trennrotors (3) der Trenneinrichtung (2) liegt, daß zum Häckseln des Strohes die Förderelemente (9) des Trennrotors (3) über den definierten Bereich mit im Abstand zueinander stehenden, außenseitig offenen Radialschlitzen (11) versehen sind, daß auf mindestens einer Aufnahmeachse (14) im Abstand zueinander stehende, in der Umlaufbahn der Förderelemente (9) liegende Häckselmesser (13) derart angeordnet sind, daß jedes Häckselmesser (13) für den Schneidvorgang kurzzeitig innerhalb des jeweiligen Radialschlitzes (11) liegt.

2. Mähdrescher nach Anspruch 1,
**dadurch gekennzeichnet**,
daß die zwischen den Radialschlitzen (11) liegenden Teile der Förderleisten (9) als Mitnehmerplatten (12) ausgebildet sind, und daß an der in Förderrichtung des Trennrotors (3) hinten liegenden Seite der Platten (12) Verstärkungsbleche (16) angeordnet sind.

3. Mähdrescher nach Anspruch 2,
**dadurch gekennzeichnet**,
daß jeder Mitnehmerplatte (12) an der in Förderrichtung des Trennrotors (3) vorn liegenden Seite eine der Drehachse des Trennrotors (3) zugewandte, das Häckselgut nach drückende Abweisplatte (17) zugeordnet ist.

4. Mähdrescher nach Anspruch 2,
**dadurch gekennzeichnet,**
daß jede Mitnehmerplatte (12) im Querschnitt winkelförmig ausgebildet ist.

5. Mähdrescher nach einem oder mehreren der vorhergehenden Ansprüche 1 bis 4,
**dadurch gekennzeichnet**,
daß innenseitig am Abscheidekorb (6), in Förderrichtung des Trennrotors (3) gesehen, unmittelbar vor der achsparallelen Aufnahmeachse (14) das Häckselgut in Richtung zur Drehachse des Trennrotors (3) leitende Rampenbleche (18) angeordnet sind.

6. Mähdrescher nach Anspruch 1,
**dadurch gekennzeichnet**,
das die außenseitig offenen Radialschlitze (11) der Förderelemente beidseitig durch Schlagzähne (32) mit einer gegenüber der Länge der Axialfluß-Häckseleinrichtung geringen Breite gebildet sind, daß die einen Radialschlitz (11) an jeder Seite begrenzenden Schlagzähne (32) an Tragringen (31) angesetzt sind und gegenüber deren äußerem Umfangsflächen vorstehen, und daß die Tragringe (31) auf dem Grundkörper (10) des Trennrotors (13) fest aufgesetzt sind.

7. Mähdrescher nach Anspruch 6,
**dadurch gekennzeichnet**,
daß die die Tragring (31) paarweise angeordnet sind, und daß der Abstand zwischen den einander zugewandten Tragringen (31) von zwei Paaren größer ist als der Abstand zwischen zwei ein Paar bildenden Tragringe (31).

8. Mähdrescher nach den Anspruch 7,
**dadurch gekennzeichnet**,
daß die Häckselmesser (13, 33) zwischen den einen Radialschlitz (11) begrenzenden Schlagzähnen (32) eines Paares von Tragringen (31) angeordnet sind.

9. Mähdrescher nach Anspruch 8,
**dadurch gekennzeichnet**,
daß zusätzlich zwischen zwei ein Paar bildende Tragringe (31) ein oder mehrere Häckselmesser (13, 33) angeordnet sind.

10. Mährescher nach Anspruch 6,
**dadurch gekennzeichnet**,
daß die Schlagzähne (32) im Querschnitt, bezogen auf eine Stirnansicht, trapezförmig ausgebildet sind, wobei sich der Querschnitt nach außen hin verkleinert.

11. Mähdrescher nach Anspruch 1,
**dadurch gekennzeichnet,**
der Abscheidekorb (6) aus mehreren fluchtend zueinander stehenden Einzelkörben (6a) gebildet ist, und daß die äußeren Ränder der Einzelkörbe (6a) in zwei parallel und im Abstand zueinander sowie parallel und im Abstand zur Drehachse des Trennrotors (3) verlaufenden Profilschienen (23) aufgehängt sind.

12. Mähdrescher nach einem oder mehreren der vorhergehenden Ansprüche 1 bis 11,
**dadurch gekennzeichnet**,
daß die die Häckselmesser (13, 33) beinhaltende Axialfluß-Häckseleinrichtung im Abstand zum Austrageende des Trennrotors (3) steht.

13. Mähdrescher nach einem oder mehreren der vorhergehenden Ansprüche 1 bis 12
**dadurch gekennzeichnet**,
daß die Axial-Häckseleinrichtung ein Teil des den Trennrotor (3) umgebenden Gehäuses (4) ist, und daß das Gehäuse im Bereich der Häckseleinrichtung aus an sich vollflächigem Material besteht, in dem Radialschlitze für den Eintritt der Häckselmesser (13) eingearbeitet sind.

14. Mähdrescher nach einem oder mehreren der vorhergehenden Ansprüche 1 bis 13,
**dadurch gekennzeichnet**,
daß die Häckselmesser (13,33) gegenüber der achsparallelen Aufnahmeachse (14) oder die achsparallele Aufnahmeachse (14, 34) für die Häckselmesser (13, 33) entgegen der Wirkung eines Kraftspeichers um einen vorbestimmten Drehwinkel entgegen der Drehrichtung des Trennrotors (3) in eine kurzzeitige Außerbetriebsstellung schwenkbar sind.

15. Mähdrescher nach einem oder mehreren der vorhergehenden Ansprüche 1 bis 14,
**dadurch gekennzeichnet**,
daß die achsparallele Aufnahmeachse (14, 34) für die Häckselmesser (13, 33) mittels eines Stelltriebes (20) um einen vorbestimmten Drehwinkel verschwenkbar sind, so daß die Häckselmesser (13, 33) in eine Betriebs- und in eine Außerbetriebsstellung bringbar sind.

16. Mähdrescher nach einem oder mehreren der vorhergehenden Ansprüche 1 bis 15,
**dadurch gekennzeichnet**,
daß der den Trennrotor (3) umgebende Ringraum (37) sich im Anschluß an die Axialfluß-Häckseleinrichtung bis zum Austrageende des Trennrotors (3) hin zumindest bereichsweise im Querschnitt vergrößert.

17. Mähdrescher nach Anspruch 15,
**dadurch gekennzeichnet**,
daß der Ringraum (37) sich im Bereich der oberen Haube (5) vergrößert.

18. Mähdrescher nach einem oder mehreren der vorhergehenden Ansprüche 1 bis 15,
**dadurch gekennzeichnet**,
daß die Häckselmesser (13, 33) mittels eines Drehantriebes rotierend antreibbar sind.

19. Mähdrescher nach einem oder mehreren der vorhergehenden Ansprüche 1 bis 15 und 18,
**dadurch gekennzeichnet**,
daß die Häckselmesser als Messerscheiben (33) oder als Tellermesser ausgebildet sind.

20. Mähdrescher nach einem oder mehreren der vorhergehenden Ansprüche 1 bis 19,
**dadurch gekennzeichnet**,
daß die Häckselmesser (13, 33) einzeln oder gruppenweise in die Betriebs-und Außerbetriebsstellung schwenkbar sind.

21. Mähdrescher nach einem oder mehreren der vorhergehenden Ansprüche 1 bis 20,
**dadurch gekennzeichnet**,
daß die Verschwenkung fernbedienbar motorisch mit wahlweise zusätzlichen Anzeigeeinrichtungen erfolgt.

22. Mähdrescher nach Anspruch 6,
**dadurch gekennzeichnet**,
daß die Tragringe (31) in gleichen Abständen zueinander stehen und daß zwischen zwei Tragringen (31) jeweils ein Häckselmesser (13, 33) angeordnet ist und daß jeweils zwei einem Häckselmesser (13, 33) zugeordnete Schlagzähne (32) in einem Winkelversatz zueinander stehen.

23. Mähdrescher nach einem oder mehrerem der vorhergehenden Ansprüche 1 bis 22,
**dadurch gekennzeichnet**,
daß der Axialfluß-Häckseleinrichtung eine unterhalb des Abgabeendes der Trenneinrichtung (2) angeordnete Häckselgut-Verteileinrichtung (36) nachgeschaltet ist.

## Claims

1. A combine harvester having a cutter table, an inclined conveyor which transports the cut material away and downstream of which is connected a tangential or axial threshing mechanism which is adjoined in the direction of flow of the cut material by at least one separating device which operates on the basis of the axial flow process and which has a rotatingly drivable separating rotor provided at its periphery with a plurality of conveyor elements extending in a helical or spiral configuration, and a housing which surrounds the or each separating rotor and which is formed from an upper cover hood and a lower separator concave, wherein at least the cover hood is provided on the inside with guide bars and wherein moreover a chopping device for the straw is associated with the separating device, characterised in that the chopping device is in the form of an axial-flow chopping device and is disposed within a defined region of the conveyor path of the separating rotor (3) of the separating device (2), that for chopping the straw the conveyor elements (9) of the separating rotor (3) are provided over the defined region with mutually spaced radial slots (11) which are open at the outward side, and that mutually spaced chopping blades (13) which are disposed in the path of rotational movement of the conveyor elements (9) are arranged on at least one mounting axis (14) in such a way that each chopping blade (13) is briefly within the respective radial slot (11) for the cutting operation.

2. A combine harvester according to claim 1 characterised in that the parts of the conveyor bars (9), which are between the radial slots (11), are in the form of entrainment plates (12) and that reinforcing plate portions (16) are arranged at the side of the plates (12), which is the downstream side in the conveyor direction of the separating rotor (3).

3. A combine harvester according to claim 2 characterised in that associated with each entrainment plate (12) at the side which is the upstream side in the conveyor direction of the separating rotor (3) is a deflection plate (17) which faces towards the axis of rotation of the separating rotor (3) and which urges the chopped material along.

4. A combine harvester according to claim 2 characterised in that each entrainment plate (12) is of an angular configuration in cross-section.

5. A combine harvester according to one or more of preceding claims 1 to 4 characterised in that arranged at the inside on the separator concave (6), viewed in thee conveyor direction of the separating rotor (3), immediately upstream of the axis-parallel mounting axis (14), are ramp plate portions (18) for guiding the chopped material in a direction towards the axis of rotation of the separating rotor (3).

6. A combine harvester according to claim 1 characterised in that the radial slots (11) of the conveyor elements, which are open at the outward side, are formed on both sides by beater teeth (32) of a width which is less than the length of the axial-flow chopping device, that the beater teeth (32) defining a radial slot (11) at each side are fitted to carrier rings (31) and project with respect to the outer peripheral surfaces thereof, and that the carrier rings (31) are fixedly mounted on the main body (10) of the separating rotor (13).

7. A combine harvester according to claim 6 characterised in that the carrier rings (31) are arranged in pairs and that the spacing between the mutually facing carrier rings (31) of two pairs is greater than the spacing between two carrier rings (31) forming a pair.

8. A combine harvester according to claim 7 characterised in that the chopping blades (13, 33) are arranged between the beater teeth (32) of a pair of carrier rings (31), said beater teeth defining a radial slot (11).

9. A combine harvester according to claim 8 characterised in that one or more chopping blades (13, 33) are additionally arranged between two carrier rings (31) forming a pair.

10. A combine harvester according to claim 6 characterised in that in cross-section, in relation to an end view, the beater teeth (32) are of a trapezoidal configuration, the cross-section decreasing outwardly.

11. A combine harvester according to claim 1 characterised in that the separator concave (6) is formed from a plurality of individual concaves (6a) which are in mutually aligned relationship and that the outer edges of the individual concaves (6a) are suspended in two profile rails (23) which extend parallel and at a spacing relative to each other and parallel and at a spacing relative to the axis of rotation of the separating rotor (3).

12. A combine harvester according to one or more of claims 1 to 11 characterised in that the axial-flow chopping device which includes the chopping blades (13, 33) is disposed at a spacing relative to the discharge end of the separating rotor (3).

13. A combine harvester according to one or more of claims 1 to 12 characterised in that the axial chopping device is a part of the housing (4) surrounding the separating rotor (3) and that in the region of the chopping device the housing comprises a material which in itself affords a solid surface and in which radial slots are provided for the entry of the chopping blades (13).

14. A combine harvester according one or more of claims 1 to 13 characterised in that the chopping blades (13, 33) are pivotable with respect to the axis-parallel mounting axis (14) or the axis-parallel mounting axis (14, 34) for the chopping blades (13, 33) through a predetermined angle of rotation against the action of a force-storage means in opposite relationship to the direction of rotation of the separating rotor (3) into a temporary inoperative position.

15. A combine harvester according to one or more of claims 1 to 14 characterised in that the axis-parallel mounting axis (14, 34) for the chopping blades (13, 33) is pivotable through a predetermined angle of rotation by means of a control drive (20) so that the chopping blades (13, 33) can be moved into an operative and an inoperative position.

16. A combine harvester according to one or more of claims 1 to 15 characterised in that the annular space (37) surrounding the separating rotor (3) increases in cross-section at least in a region-wise manner adjoining the axial-flow chopping device to the discharge end of the separating rotor (3).

17. A combine harvester according to claim 15 characterised in that the annular space (37) increases in size in the region of the upper hood (5).

18. A combine harvester according to one or more of claims 1 to 15 characterised in that the chopping blades (13, 33) are rotatingly drivable by means of a rotary drive.

19. A combine harvester according to one or more of claims 1 to 15 and 18 characterised in that the chopping blades are in the form of blade discs (33) or disc cutters.

20. A combine harvester according to one or more of claims 1 to 19 characterised in that the chopping blades (13, 33) are pivotable individually or group-wise into the operative and inoperative positions.

21. A combine harvester according to one or more of claims 1 to 20 characterised in that the pivotal movement is remotely controllably effected by motor means with optionally additional display devices.

22. A combine harvester according to claim 6 characterised in that the carrier rings (31) are at equal spacings relative to each other and that a respective chopping blade (13, 33) is arranged between each two carrier rings (31) and that each two beater teeth (32) associated with a chopping blade (13, 33) are in an angularly displaced relationship with each other.

23. A combine harvester according to one or more of claims 1 to 22 characterised in that connected downstream of the axial-flow chopping device is a chopped material distributing device (36) arranged beneath the discharge end of the separating device (2).

## Revendications

1. Moissonneuse-batteuse comprenant une table de coupe, un convoyeur incliné reprenant le produit de récolte coupé, suivi d'un système batteur tangentiel ou axial auquel se raccorde dans le sens de déplacement du produit de récolte au moins un dispositif séparateur fonctionnant suivant le procédé de flux axial, qui comprend un rotor séparateur entraîné en rotation, présentant sur sa périphérie plusieurs éléments transporteurs en hélice ou en spirale, et un carter entourant le ou chaque rotor séparateur et formé d'un capot supérieur et d'un panier-grille inférieur, au moins le capot étant équipé intérieurement d'éléments de guidage, un dispositif hacheur pour la paille étant associé au dispositif séparateur, caractérisée par le fait que le dispositif hacheur est réalisé sous forme de dispositif hacheur à flux axial et est disposé à l'intérieur d'une zone définie du trajet de transport du rotor séparateur (3) du dispositif séparateur (2), que les éléments transporteurs (9) du rotor séparateur (3) sont munis, sur ladite zone définie, en vue du hachage de la paille, de fentes radiales (11) espacées, débouchant côté extérieur, que des couteaux hacheurs (13) espacés les uns des autres et situés sur la trajectoire de rotation des éléments transporteurs (9) sont disposés sur au moins un axe de pivotement (14) de telle manière que chaque couteau hacheur (13) se trouve, pour l'opération de coupe, situé brièvement a l'intérieur de la fente radiale (11) respective.

2. Moissonneuse-batteuse suivant la revendication 1, caractérisée par le fait que les parties des éléments transporteurs (9) situés entre les fentes radiales (11) sont réalisées sous la forme de plaques d'entraînement (12) et que des tôles de renfort (16) sont disposées sur le côté des plaques (12) situé en arrière dans le sens de transport du rotor séparateur (3).

3. Moissonneuse-batteuse suivant la revendication 2, caractérisée par le fait qu'a chaque plaque d'entraînement (12) est associée, sur le côté situé en avant dans le sens de transport du rotor séparateur (3), une plaque de déflexion (17) tournée vers l'axe de rotation du rotor séparateur (3) et poussant le produit de hachage vers l'extérieur.

4. Moissonneuse-batteuse suivant la revendication 2, caractérisée par le fait que chaque plaque d'entraînement (12) présente un profil en cornière.

5. Moissonneuse-batteuse suivant une ou plusieurs des revendications précédentes 1 à 4, caractérisée par le fait que des tôles (18) formant rampes conduisant le produit de hachage vers l'axe de rotation du rotor séparateur (3) sont disposées intérieurement sur le panier-grille (6) en étant situées, dans le sens de rotation du rotor séparateur (3), directement en avant de l'axe de pivotement (14) des couteaux hacheurs, parallèle a l'axe du rotor.

6. Moissonneuse-batteuse suivant la revendication 1, caractérisée par le fait que les fentes radiales (11) des éléments transporteurs, débouchant côté extérieur, sont formés de part et d'autre par des dents de battage (32) ayant une largeur faible par rapport à la longueur du dispositif hacheur à flux axial, que les dents de battage (32) délimitant une fente radiale (11) sur chaque côté sont disposées sur des anneaux porteurs (31) en faisant saillie sur les surfaces périphériques extérieures de ces derniers, et que les anneaux porteurs (31) sont rapportés sur le corps de base (10) du rotor séparateur (13) de manière à être solidaire de ce dernier.

7. Moissonneuse-batteuse suivant la revendication 6, caractérisée par le fait que les anneaux porteurs (31) sont disposés par paires, et que la distance entre les anneaux porteurs (31) voisins de deux paires est plus grande que la distance entre deux anneaux porteurs (31) d'une paire.

8. Moissonneuse-batteuse suivant la revendication 7, caractérisée par le fait que les couteaux hacheurs (13, 33) sont disposés entre les dents de battage (32) qui délimitent une fente radiale (11) et font partie d'une paire d'anneaux porteurs (31).

9. Moissonneuse-batteuse suivant la revendication 8, caractérisée par le fait qu'un (ou plusieurs) couteau(x) hacheur(s) (13, 33) est (sont) disposé (s) en plus entre deux anneaux porteurs (31) d'une paire.

10. Moissonneuse-batteuse suivant la revendication 6, caractérisée par le fait que les dents de battage (32) présentent en élévation latérale un profil en trapèze, avec une largeur diminuant vers l'extérieur.

11. Moissonneuse-batteuse suivant la revendication 1, caractérisée par le fait que le panier-grille (6) est constitué par plusieurs paniers élémentaires (6a) alignés les uns avec les autres et que les bords extérieurs des paniers élémentaires (6a) sont suspendus à deux profilés (23) parallèles, s'étendant à distance l'un de l'autre, parallèlement et à distance de l'axe de rotation du rotor séparateur (3).

12. Moissonneuse-batteuse suivant une ou plusieurs des revendications précédentes 1 à 11, caractérisée par le fait que le dispositif hacheur à flux axial contenant les couteaux hacheurs (13, 33) se trouve à distance de l'extrémité de sortie du rotor séparateur (3).

13. Moissonneuse-batteuse suivant une ou plusieurs des revendications précédentes 1 à 12, caractérisée par le fait que le dispositif hacheur à flux axial est une partie du carter entourant le rotor séparateur (3) et que le carter est constitué, dans la zone du dispositif hacheur, par un matériau plein dans lequel sont ménagées des fentes radiales pour l'entrée des couteaux hacheurs (13).

14. Moissonneuse-batteuse suivant une ou plusieurs des revendications précédentes 1 à 13, caractérisée par le fait que les couteaux hacheurs (13, 33) sont pivotants par rapport à l'axe de pivotement (14) ou que l'axe de pivotement (14, 34) pour les couteaux hacheurs (13, 33) est pivotant, sous l'action d'un accumulateur d'énergie, d'un angle prédéterminé à l'encontre du sens de rotation du rotor séparateur (3), brièvement dans une position inactive.

15. Moissonneuse-batteuse suivant une ou plusieurs des revendications précédentes 1 à 14, caractérisée par le fait que l'axe de pivotement (14, 34) pour les couteaux hacheurs (13, 33) peut pivoter, sous l'action d'un actionneur (20), d'un angle prédéterminé, de manière que les couteaux hacheurs (13, 33) puissent être amenés en position active et en position inactive.

16. Moissonneuse-batteuse suivant une ou plusieurs des revendications précédentes 1 à 15, caractérisée par le fait que l'espace annulaire (37) qui entoure le rotor séparateur (3) augmente de section, au moins par zone, vers l'extrémité de sortie du rotor séparateur (3), à la suite du dispositif hacheur à flux axial.

17. Moissonneuse-batteuse suivant la revendication 16, caractérisée par le fait que l'espace annulaire (37) augmente dans la zone du capot supérieur (5).

18. Moissonneuse-batteuse suivant une ou plusieurs des revendications précédentes 1 à 15, caractérisée par le fait que les couteaux hacheurs (13, 33) sont entraînés en rotation au moyen d'un système d'entraînement en rotation.

19. Moissonneuse-batteuse suivant une ou plusieurs des revendications précédentes 1 à 15 et 18, caractérisée par le fait que les couteaux hacheurs sont réalisés sous forme de couteaux circulaires ou couteaux disques (33).

20. Moissonneuse-batteuse suivant une ou plusieurs des revendications précédentes 1 à 19, caractérisée par le fait que les couteaux hacheurs (13, 33) peuvent être amenés par pivotement individuellement ou par groupes en position active et en position inactive.

21. Moissonneuse-batteuse suivant une ou plusieurs des revendications précédentes 1 à 20, caractérisée par le fait que le pivotement s'effectue de façon motorisée par télécommande avec signalisation sélective sur des dispositifs indicateurs supplémentaires.

22. Moissonneuse-batteuse suivant la revendication 6, caractérisée par le fait que les anneaux porteurs (31) se trouvent à des distances égales les uns des autres et qu'un couteau hacheur (13, 33) est disposé respectivement entre deux anneaux porteurs (31), deux dents de battage (32) associées à un couteau hacheur (13, 33) présentant respectivement un décalage angulaire l'une par rapport à l'autre.

23. Moissonneuse-batteuse suivant une ou plusieurs des revendications précédentes 1 à 22, caractérisée par le fait que le dispositif hacheur à flux axial est suivi d'un dispositif éparpilleur de produit haché (36) disposé en dessous de l'extrémité de sortie du dispositif séparateur (2).
